# EUROPEAN PATENT APPLICATION

(11) **EP 4 336 776 A1**
(43) Date of publication of application: **13.03.2024**
(21) Application number: 22194456.4
(22) Date of filing: 07.09.2022
(51) Int. Cl.: H04L 9/32, G06Q 40/04, H04L 9/00

(54) **METHOD AND SYSTEM FOR FACILITATING A SECURE TRANSFER OF ASSETS**

(71) Applicant: Concept Technology AG, 6312 Steinhausen (CH)
(72) Inventor: Yang, Zhe, 8704 Herrliberg (CH); Xu, Yali, 8704 Herrliberg (CH)
(74) Representative: Rentsch Partner AG

(57) **Abstract**

A computer implemented method, devices, and a system is disclosed for facilitating a secure transfer of cryptocurrency between two Blockchain platforms (C1, C2) using a computerized channel relay server (1), the method comprising monitoring the first Blockchain platform (C1) for a particular transaction, verifying whether the transaction has been confirmed, and transmitting transaction confirmation information to the second Blockchain platform (C2), such that the cryptocurrency is made available on the second Blockchain platform (C2).

## Description

### FIELD OF THE DISCLOSURE

The present disclosure relates to methods and systems for facilitating a secure transfer of assets between two Blockchain platforms. Specifically, the present disclosure relates to methods and systems for facilitating a secure transfer of cryptocurrency between two Blockchain platforms, whereby a channel relay server monitors two Blockchain platforms, each having a smart contract for transferring a defined number of tokens of a particular cryptocurrency between a first Blockchain platform and a second Blockchain platform.

### BACKGROUND OF THE DISCLOSURE

With Bitcoin a first cryptocurrency was implemented on the first Blockchain platform. More cryptocurrencies and various further Blockchain platforms, for example Ethereum, were developed and implemented thereafter, adding more features and functions, such as smart contracts, and making the use and applications of cryptocurrencies more popular worldwide among increasingly diverse users. While each Blockchain platform has a native cryptocurrency, for example, Bitcoin on the Bitcoin Blockchain, or Ether on the Ethereum platform, many Blockchain platforms support the issuance of further non-native cryptocurrencies, for example, cryptocurrencies according to the ERC-20 standard have proven to be popular on the Ethereum platform. These non-native cryptocurrencies are enabled by so-called smart-contracts or similar scripting capabilities on these Blockchain platforms.

Blockchain platforms are - explained most simply - append-only ledgers whose entries comprise transactions from one address to another. These addresses identify a particular digital wallet related to an owner entity, for example a person or a company. These addresses can alternatively identify a smart contract, the smart contract having scripting functionality and internal data. The scripting functionality of the smart contracts is limited due to the limitations in the computational capabilities of Blockchain platforms. A smart contract on a particular Blockchain platform can interact directly only with the Blockchain platform itself, in particular by receiving transactions from addresses, sending transactions to addresses, or interacting with other smart contracts. On some Blockchains, smart contracts can interact with each other by calling a function of another smart contract (i.e. executing code stored in another smart contract).

Non-native cryptocurrencies are, unlike the native cryptocurrency, not held directly in digital wallets, but each managed by one or more particular cryptocurrency smart contracts which are responsible for the creation and book-keeping of the particular cryptocurrency. In particular, each cryptocurrency smart contract maintains a database of addresses and their respective balances, each address being associated with a digital wallet or a smart contract, each address being associated with an owner entity. The owner entity can transfer a particular number of tokens of a cryptocurrency to a recipient by sending a transaction to the cryptocurrency smart contract, wherein the transaction defines the recipient address and a number of cryptocurrency tokens to be transmitted. These transactions result in the cryptocurrency smart contract updating its internal database. However, such transactions are limited in that they only allow for the cryptocurrency to be transmitted to a recipient on the same Blockchain platform as the sender.

Some types of cryptocurrencies are available on multiple Blockchain platform, each Blockchain platform having one or more cryptocurrency smart contracts involved in issuing and managing that particular type of cryptocurrency token. For example, both the Blockchain Ethereum and the Blockchain Alogrand have a cryptocurrency token called USD Coin (USDC), which is a digital stablecoin pegged to the United States Dollar. Other cryptocurrencies on a particular Blockchain platform have an equivalent cryptocurrency available on a different Blockchain platform. These include so-called pegged cryptocurrencies. For example, while Bitcoin (BTC) is available only on the Bitcoin Blockchain platform, Ethereum has a wrapped Bitcoin (WBTC), which is equivalent to BTC in that it is designed to be exchangeable 1:1 for BTC.

When two parties agree to exchange cryptocurrency on a first Blockchain platform with cryptocurrency on a second Blockchain platform, i.e. a first party sends cryptocurrency on the first Blockchain to the second party and in return receives cryptocurrency on the second Blockchain from the second party, a third party is typically used to reduce the counterparty risk. This is because Blockchain platforms cannot directly interact with each other and therefore the transacting parties cannot make the transactions directly contingent on each other. The third party acts, for example, as an escrow, temporarily holding the cryptocurrencies to be exchanged from both parties involved in the transaction and then releasing the cryptocurrencies to the appropriate party once both parties have transmitted their cryptocurrency to the escrow. While this process reduces the risk, there is still a remaining risk related to the third party because the third party may keep the cryptocurrency tokens for itself or may be unable to timely release the funds, for example because of a technical interruption. Additionally, this process can take a long time because the escrow may need to wait until the first transactions (from the parties to the escrow) are confirmed on the Blockchain platforms before releasing the funds. Depending on the type of Blockchain platform and timeouts and wait times in the process set out by the escrow, this can take over an hour.

Other examples of methods for transferring cryptocurrency tokens from one Blockchain platform to another involve asset bridges, where users transfer a number of cryptocurrency tokens to an address associated with a first gateway contract for escrow purposes on a first Blockchain, then wait for a second gateway contact on the second Blockchain to transfer the same number of cryptocurrency tokens to their address on the second Blockchain. However, this method still involves a considerable counterparty risk because there is a brief moment where the user is not in possession of their cryptocurrency, but rather relies on those responsible for the gateway contracts not to steal their cryptocurrency and additionally relies on the computing infrastructure monitoring the gateway contracts not to fail.

There is therefore a need to provide a method and system for transferring cryptocurrency from one Blockchain platform to another, which has greater speed and reliability and reduces the counterparty risks.

### SUMMARY OF THE DISCLOSURE

It is therefore an object of the present disclosure to provide a computer implemented method for facilitating a secure transfer of digital assets between two Blockchain platforms using a computerized channel relay server. The method comprises monitoring, using a processor of the channel relay server, a first Blockchain platform for a chain-one-to-channel data transaction comprising: a defined target address of a first smart contract, a defined number of tokens of a particular cryptocurrency, and a first digital signature, wherein a first address of the owner entity is derivable either from the first digital signature of the chain-one-to-channel data transaction, or derivable from the transaction instructions of the chain-one-to-channel data transaction. Optionally, the chain-one-to-channel data transaction comprises a recipient address on a second Blockchain platform. The method comprises verifying, using the processor, whether the chain-one-to-channel data transaction has been confirmed on the first Blockchain platform. The method comprises transmitting, using the processor, transaction confirmation information to a second smart contract on a second Blockchain platform, in case of affirmative confirmation of the chain-one-to-channel data transaction.

For example, transmitting the transaction confirmation information to the second smart contract on the second Blockchain platform comprises determining, using the processor, whether the chain-one-to-channel data transaction has been included in at least one block of the first Blockchain platform, preferably at least three blocks of the first Blockchain platform, most preferably at least ten blocks of the first Blockchain platform.

In an embodiment, the method comprises implementing, by the computerized channel relay server, using the processor, a node of the first Blockchain platform. Monitoring the first Blockchain platform comprises identifying, using the processor, the chain-one-to-channel data transaction in one or more of the following: in a transaction pool related to the first Blockchain platform and/or in a block of the first Blockchain platform.

In an embodiment, the computerized channel relay server comprises a plurality of channel relay computers, and a subset of the channel relay computers designated as witnesses of the chain-one-to-channel data transaction. The method further comprises submitting, using the processor of a particular one of the channel relay computers designated as a witness, a witness data transaction to the second Blockchain causing the transmitting of the transaction confirmation information. The witness data transaction includes a digital signature of the witness and at least part of the chain-one-to-channel data transaction, or an identifier thereof, and authorization information.

For example, the witness data transaction is transmitted to a particular smart contract on the second Blockchain. The witness data transaction is configured to trigger the particular smart contract on the second Blockchain to transmit the transaction confirmation information.

In an embodiment, the method comprises monitoring, by the channel relay computers, the second Blockchain platform for a chain-two-confirmation data transaction matching the chain-one-to-channel data transaction, and establishing, in the channel relay computers, a consensus amongst the channel relay computers as to whether the transaction confirmation information is to be transmitted for the chain-one-to-channel data transaction, dependent on the correct execution of the chain-two-confirmation data transaction on the second Blockchain platform.

In an embodiment, the method comprises implementing, by the computerized channel relay server, a node of the second Blockchain platform. Monitoring, using the processor, the second Blockchain platform comprises identifying, using the processor, a chain-two-confirmation data transaction in one or more of the following: in a transaction pool related to the second Blockchain platform and/or in a block of the second Blockchain platform.

In an embodiment, transmitting transaction confirmation information to the second smart contract on the second Blockchain platform comprises: determining, using the processor, whether the chain-one-to-channel data transaction has been included in checkpoint information of the first Blockchain platform and/or of the first smart contract, the checkpoint information being related to one or preferably two checkpoints provided by the first Blockchain platform and/or provided by the first smart contract, respectively. The method comprises generating, using the processor, a chain-two confirmation data transaction on the second Blockchain platform, causing the transmission of the transaction confirmation information on the second Blockchain platform, the chain-two-confirmation data transaction comprising at least part of the chain-one-to-channel data transaction, or an identifier thereof, and authorization information.

In an embodiment, the method further comprises monitoring, using the processor, the first Blockchain platform for a channel-to-chain-one data transaction comprising: the defined target address of the first smart contract, and a third digital signature, wherein the first address of the owner entity is either derivable from the third digital signature, or derivable from the transaction instructions of the channel-to-chain-one data transaction, wherein a second address on the second Blockchain platform is derivable from the execution of the channel-to-chain-one data transaction. The method comprises identifying, using the processor, either: data transactions on the first Blockchain platform, including at least all data transactions since a last confirmed recall of a previous channel-to-chain-one data transaction, the previous channel-to-chain-one data transaction related to both of: the first address and the first smart contract, the data transactions comprising confirmed data transactions and/or unconfirmed data transactions, each data transaction relating to a cryptocurrency token transfer and having a timestamp; and/or a precalculated transaction summary of the aforementioned data transactions. The method comprises identifying, using the processor, either: data transactions on the second Blockchain platform, including at least all data transactions since the last confirmed recall of the previous channel-to-chain-one data transaction, the previous channel-to-chain-one data transaction being related to both of: the second address and the second smart contract, the data transactions comprising confirmed data transactions and/or unconfirmed data transactions, each data transaction relating to a cryptocurrency token transfer and having a timestamp; or comprises identifying a precalculated transaction summary of the aforementioned data transactions. The method comprises determining a current total balance of the owner entity using the identified data transactions on the first Blockchain platform (or the pre-calculated transaction summaries of the data transactions on the first Blockchain platform), and the identified data transactions on the second Blockchain platform (or the pre-calculated transaction summaries of the data transactions on the second Blockchain platform). The method comprises transmitting, using the processor, recall rejection information to the first smart contract if the current total balance is negative. The method optionally comprises transmitting, using the processor, recall confirmation information to the first smart contract if the current total balance is non-negative.

In an embodiment, the channel-to-chain-one data transaction further comprises a defined amount of cryptocurrency tokens to be returned to the first address of the owner entity. Additionally, or alternatively, the channel-to-chain-one data transaction can further comprise an amount of cryptocurrency tokens defining the remaining total balance of the defined type of cryptocurrency token should the recall be confirmed.

In an embodiment, the method further comprises identifying, on one or more of: the first Blockchain platform or the second Blockchain platform, checkpoint information related to one or more checkpoints of the first Blockchain platform or the second Blockchain platform, a particular checkpoint comprising commitment data of the smart contract(s), the commitment data comprising a state of the smart contract(s) corresponding to a timestamp of the particular checkpoint information. Optionally, the checkpoint information further comprises a reference to a previous checkpoint information. The method comprises confirming, using the processor, the channel-to-chain-one data transaction using the checkpoint information and generating, using the processor, the transaction confirmation information, in case of affirmative confirmation of the chain-one-to-channel data transaction.

In an embodiment, determining whether the chain-one-to-channel data transaction and the chain-two-confirmation data transaction match comprises comparing, using the processor, a first identifier included in the chain-one-to-channel data transaction and a second identifier included in the chain-two-confirmation data transaction. Additionally, or alternatively, in cases where the chain-two-confirmation data transaction includes a part of the chain-one-to-channel data transaction, a first computed digital digest of the chain-one-to-channel data transaction and a second computed digital digest of the chain-two-confirmation data transaction are compared.

In a further embodiment wherein the chain-two-confirmation data transaction comprises part of the chain-one-to-channel data transaction (i.e. a data field in the chain-two-confirmation data transaction has copied therein part of the data of the chain-one-to-channel data transaction which uniquely specifies the chain-one-to-channel data transaction), determining whether the data transactions match includes comparing the part of the chain-two-confirmation data transaction that uniquely specifies the chain-one-to-channel data transaction with the actual chain-one-to-channel data transaction as recorded in the first Blockchain.

In addition to the method for facilitating a secure transfer of digital assets between two Blockchain platforms, the present disclosure further relates to a computerized channel relay server for facilitating a secure digital asset transfer between two Blockchain platforms, the channel relay server comprising a processor configured to implement the method disclosed herein.

In an embodiment, the channel relay server comprises a plurality of distributed channel relay computers communicatively coupled to each other, for example using the Internet.

In an embodiment, each channel relay computer comprises a processor configured to monitor the first Blockchain platform for the chain-one-to-channel data transaction addressed to the first smart contract. The processor is configured to exchange one or more data messages with other channel relay computers to establish in the channel relay server a consensus as to whether the chain-one-to-channel data transaction has been confirmed. Additionally or alternatively, the processor may be configured to transmit data to one or more smart contracts on one or more of the Blockchain platforms. The processor is configured to transmit the transaction confirmation information to the second smart contract in case of the consensus being affirmatively established.

In addition to the method for facilitating a secure transfer of digital assets between two Blockchain platforms and a computerized channel relay server for facilitating a secure digital asset transfer between two Blockchain platforms, the present disclosure further relates to a system for facilitating a secure transfer of digital assets between two Blockchain platforms, the system comprising a computerized channel relay server as described herein and a client computer associated with an owner entity, the client computer comprising a processor configured to generate a chain-one-to-channel data transaction on a first Blockchain platform, the chain-one-to-channel data transaction comprising: a defined target address of a first smart contract, a defined number of tokens of a particular cryptocurrency, and a first digital signature, wherein a first address of the owner entity is derivable either from the first digital signature or from transaction instructions of the chain-one-to-channel data transaction. The processor is configured to generate a channel-to-chain-two data transaction on a second Blockchain platform, the channel-to-chain-two data transaction comprising a target address of a second smart contract and a digital signature providing an authorization of the owner entity.

In an embodiment, the processor of the client computer is configured to generate a chain-two-confirmation data transaction on the second Blockchain platform addressed to the second smart contract, prior to generating the channel-to-chain-two data transaction, the chain-two-confirmation data transaction comprising at least part of the chain-one-to-channel data transaction (or an identifier thereof), and authorization information.

In an embodiment, the processor of the client computer is configured to generate a channel-to-chain-one data transaction on the first Blockchain platform, the channel-to-chain-one data transaction comprising: the defined target address of the first smart contract and a third digital signature, wherein a first address of the owner entity is derivable from the third digital signature ,or derivable from the transaction instructions, or derivable from the transaction instructions of the channel-to-chain-one data transaction.

In an embodiment, the processor of the client computer is configured to generate a chain-two-to-channel data transaction on the second Blockchain platform, the chain-two-to-channel data transaction comprising: the defined target address of the second smart contract, a defined number of tokens of the particular cryptocurrency, and a second digital signature providing an authorization of the owner entity.

In an embodiment, the system further comprises a first smart contract on the first Blockchain platform configured to receive the chain-one-to-channel data transaction from the first address associated with the owner entity. The first smart contract is configured to generate and store, using data contained in the chain-one-to-channel data transaction, the pair of the first address and the second address of the owner entity on the first Blockchain. Additionally, the first smart contract can be configured to receive data transactions from an address associated with the channel relay server.

In an embodiment, the system further comprises a second smart contract on the second Blockchain platform configured to receive the chain-two-confirmation data transaction comprising at least part of the chain-one-to-channel data transaction, or an identifier thereof, and authorization information. Additionally, the second smart contract is configured to generate and store a current balance of cryptocurrency tokens associated with the owner entity on the second Blockchain, using the defined number of tokens of the chain-one-to-channel data transaction.

In addition to the method for facilitating a secure transfer of digital assets between two Blockchain platforms, a computerized channel relay server for facilitating a secure digital asset transfer between two Blockchain platforms, and a system for facilitating a secure transfer of digital assets between two Blockchain platforms, the present disclosure further relates to a computer program product comprising computer program code which directs a processor of a computerized channel relay server to perform the method as disclosed herein.

In an embodiment, the computer program product comprises a non-transitory computer readable medium having stored thereon the computer program code.

### BRIEF DESCRIPTION OF THE DRAWINGS

The herein described disclosure will be more fully understood from the detailed description given herein below and the accompanying drawings, which should not be considered limiting to the invention described in the appended claims. The drawings in which:
- Figure 1: shows a block diagram schematically illustrating a channel relay server, two Blockchain platforms, and a client computer,
- Figure 2A: shows a block diagram schematically illustrating a first Blockchain platform,
- Figure 2B: shows a block diagram schematically illustrating a second Blockchain platform,
- Figure 3: shows a block diagram schematically illustrating a number of channel relay computers forming a distributed channel relay server,
- Figure 4: shows a flow diagram illustrating a number of exemplary steps for transmitting transaction confirmation information to the second Blockchain platform,
- Figure 5: shows a flow diagram illustrating a number of exemplary steps for transmitting transaction confirmation instructions to the second Blockchain platform, and
- Figure 6: shows a flow diagram illustrating a number of exemplary steps for transmitting recall confirmation information to the first Blockchain platform.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

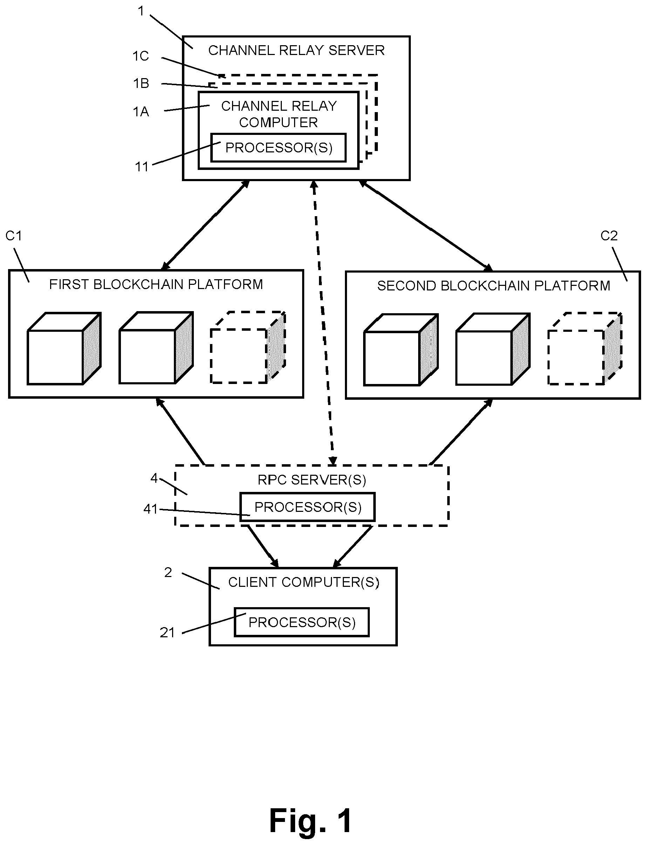

**Figure 1** shows a block diagram illustrating schematically a channel relay server 1, a first Blockchain platform C1 and a second Blockchain platform C2. A client computer 2 and optional remote procedural call (RPC) servers 4 are also shown. The channel relay server 1 is connected to the Blockchain platforms C1, C2 via a communication network, for example the Internet. The client computer 2, which comprises at least one processor 21, is similarly connected to the Blockchain platforms C1, C2 via a communication network, for example the Internet. Optionally, the client computer 2 is connected to the Blockchain platforms C1, C2 via one or more RPC servers 4.

The channel relay server 1, as is explained herein in detail, provides functions which enable an owner entity, i.e. a natural and/or legal person, using the client computer 2, to securely transfer cryptocurrency assets, in particular a number of cryptographic tokens, between the first Blockchain platform C1 and the second Blockchain platform C2 in a fast and secure manner which considerably reduces the counterparty risk associated with known methods of transferring cryptocurrency assets using escrows.

The channel relay server 1 comprises one or more channel relay computers 1A, 1B, 1C each having at least one processor 11. The channel relay computers 1A, 1B, 1C can be co-located or distributed across a plurality of locations. The channel relay computers 1A, 1B, 1C can be operated by one or more persons or legal entities, and in an embodiment form a decentralized channel relay server 1.

Depending on the embodiment, the channel relay server 1 is public, such that any computer can freely join the channel relay server 1 as an additional channel relay computer 1A, 1B, 1C. In another embodiment, the channel relay server 1 is permissioned, such that only specific computers may join the channel relay server 1 as a channel relay computer 1A, 1B, 1C.

In an embodiment, the channel relay server 1 performs at least some steps using a consensus mechanism in which the channel relay computer 1A, 1B, 1C agree upon whether a particular step should be performed or not. For example, each channel relay computer 1A, 1B, 1C provides a stake to participate in the channel relay server 1 and, if that channel relay computer 1A, 1B, 1C is deemed to be acting erroneously or maliciously, forfeits the stake. Determining whether a particular channel relay computer 1A, 1B, 1C acts maliciously or not can be based on a consensus mechanism of the channel relay server 1. The consensus mechanism may involve direct communication between the channel relay computers 1A, 1B, 1C. For example, direct communication involves directly exchanging data between the channel relay computers 1A, 1B, 1C. In another example, the consensus mechanism involves the channel relay computers 1A, 1B, 1C interacting with one or more of the Blockchain platforms. In particular, the channel relay computers 1A, 1B, 1C submit data transactions to smart contracts (for example, the witness smart contracts described herein), which smart contracts facilitate the consensus mechanism.

The channel relay computers 1A, 1B, 1C, as well as the client computer 2, comprise one or more fixed or mobile computers, including server computers, laptops, desktop computers, or smart phones, and/or other computerized devices, such as tablets or smartwatches etc.

The client computer(s) 2 can be co-located or distributed across a plurality of locations. The client computers 2 can be operated by the owner entity, and in an embodiment form a client computer (2). The steps described as being performed on the client computer(s) 2 do not have to all be performed on the same client computer 2. The owner entity may use one or more client computer(s) 2 to generate the data transactions described herein.

The channel relay server 1, in particular the channel relay computers 1A, 1B, 1C, as well as the client computer 2 and the optional RPC server(s) 4, comprise processor(s) 11, 21, 41 which are configured to perform various steps, as described below in more detail. The processor(s) 11, 21, 41 are configured or programmed, respectively, by computer program code stored in computer-readable memory of the channel relay server 1, the client computer 2, or the RPC server 4, respectively. The computer-readable memory is connected to the processor(s) 11, 21, 41 of the channel relay server 1, the client computer 2, or the RPC server 4, respectively, in a fixed or removable fashion.

The channel relay server 1, the client computer 2, and the RPC server 4 each comprise a communication circuit configured for data communication via the communication network. The communication network comprises the Internet, accessible to the channel relay server 1, the client computer 2, and the RPC server 4 through fixed networks and/or wireless networks. For example, the communication network includes a local area network (LAN), a wireless local area network (WLAN), and/or a mobile radio network, such as a GSM-network (Global System for Mobile communication), a UMTS-network (Universal Mobile Telephone System) or another mobile radio telephone system, for accessing the Internet.

It is clear to the person skilled in the art that the computer program code can comprise compiled and/or uncompiled code and can be packaged into one or more software applications, libraries, or the like. The skilled person is also aware that at least some of the steps can be carried out on other connected devices.

The RPC server(s) 4 are one or more computer servers having a network communication interface that provides remote connection and communication services between the Blockchain platforms C1, C2 and the client computer 2. The RPC server(s) 4 implement a node of one or both of the Blockchain platforms C1, C2. The steps described herein as being performed by the client computer 2, in particular the processor 21 of the client computer 2, may alternatively be carried out, enabled, or supported by the RPC server(s) 4. Specifically, where the client computer 2 does not implement a node of one or both of the Blockchain platforms C1, C2, the RPC servers(4) can be configured to provide an interface to the client computer 2, enabling the client computer 2 to interact with one or both of the Blockchain platforms C1, C2.

The Blockchain platforms C1, C2 are decentralized computing platforms, particularly append-only Blockchain platforms, for example, the well-known Bitcoin or Ethereum Blockchains, which comprise a large number of communicatively coupled computing nodes configured to maintain a blockchain consensus mechanism secured canonical sequence of Blocks and reach agreement about subsequent Blocks to be appended to the sequence. The computing nodes can include full nodes that store the complete Blockchain and light nodes which store only a part of the Blockchain of a given Blockchain platform C1, C2.

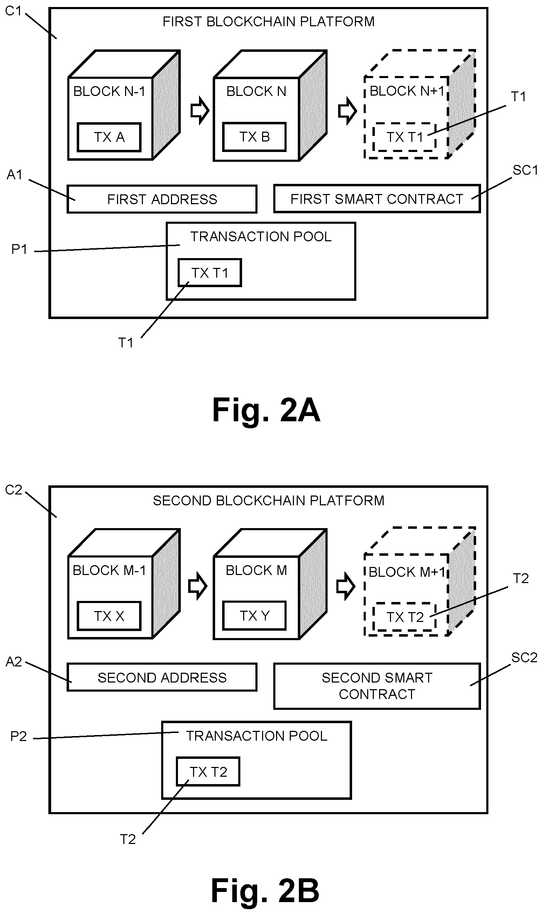

Additional aspects and features of the Blockchain platforms C1, C2 relevant to the present disclosure discussed with reference to **Figures 2A** and **2B** below.

In an embodiment, the channel relay server 1 implements a node (e.g. a full node or a light node) of the first Blockchain platform C1 and/or a node (e.g. a full node or a light node) of the second Blockchain platform C2.

**Figures 2A** and **2B** show block diagrams illustrating schematically the first Blockchain platform C1 and the second Blockchain platform C2, respectively. Each Blockchain platform C1, C2 comprises a sequence or list of blocks as illustrated. The sequence is established using a consensus mechanism by the Blockchain platform C1, C2. Each block comprises a number of data transactions TX. Each data transaction TX indicates and comprises the amounts of a crypto currency asset, e.g. Bitcoin or Ether, transferred, for example, from a sender, the sending entity, to a recipient, the receiving entity. The sender is identified by a sender address and the recipient is defined by a target address. For example, in Ethereum, the transaction entities are accounts defined by a twenty-byte address. For example, the address of a digital wallet identifies a cryptographically linked key pair (consisting of the public key and a private key, usually by deriving from the public key, however it may not be able to derive the public key from the address). In addition to amounts of a cryptocurrency asset, the data transactions can optionally comprise additional data. As shown in **Figure 2A****,** Block N-1 comprises a data transaction TX A and Block N comprises a data transaction TX B. A currently proposed Block N+1 comprises a data transaction TX T1. As shown in **Figure 2B****,** Block M-1 comprises a data transaction TX X and Block M comprises a data transaction TX Y. A currently proposed block M+1 comprises a data transaction TX T2.

In this disclosure, the sender addresses A1, A2, on one or both of the Blockchain platforms C1, C2 respectively, belongs to, for example, an owner entity, which may be a natural or legal person, or a collection of natural and/or legal persons. Additionally, the sender address A2 on the second Blockchain platform C2 belongs to a separate owner entity. The system, in particular including channel relay server 1, acts as a channel the Blockchain platforms C1, C2, either for the owner entity or for the owner entity and the separate owner entity. The cryptocurrency token balance stored in the channel can be freely withdrawn to the owner entity and/or the separate owner entity. Without loss of generality, throughout this disclosure, we can assume that the channel belongs to a single owner entity, and that the separate owner entity is the same as the owner entity. In this case, the sender addresses A1, A2, of the owner entity, can be instructed by one or more digital wallets, on one or both of the Blockchain platforms C1, C2. These digital wallets are identified by their signer addresses, and transactions from these digital wallets are authorized by using the (secretly kept) private key matching their public key (by which the address is derived from) to digitally sign a transaction. As such, the transactions comprise a digital signature. Using the digital signature, third parties can confirm firstly the signer of the transaction, and also that the transaction was transmitted from the signer wallet and authorized by the signer, i.e. that the private key belonging to the signer digitally signed the transaction. In an example, when the sender address A1 of the owner entity is identified and directly instructed by a digital wallet, the sender address A1 can be derived from the digital signature. In another example, the owner entity may employ mechanism such as multi-signature wallets or smart contracts, where it is configured to permit a transaction in the name of the sender address A1, if and only if a predefined number of signatures from a list of authorized signer wallets provide their digital signatures for the instruction to be executed. In this case, third parties can confirm the signer of the transactions, and also that the data transaction(s) was authorized by the signers. Further, the multi-signature mechanism, using additional functions of the Blockchain platforms C1, C2 and/or smart contracts on these Blockchain platforms, when successfully authorized, allows the signed instructions to be executed on the Blockchain platforms C1, C2 in the name of the sender address A1 of the owner entity.

In addition to transactions addressed to one or more digital wallets on a particular Blockchain C1, C2, a transaction can also be addressed to a smart contract, and/or if allowed by the specific Blockchain platform C1, C2, addressed to a combination of one or more smart contracts and digital wallets.

A smart contract is a computer program stored on a Blockchain platform C1, C2, which is executed on by the Blockchain platform C1, C2 when predetermined conditions are met, in particular when a transaction is addressed to the smart contract. The smart contract comprises one or more functions and a data store. When a smart contract receives a transaction directed to it, it can perform one or more functions according to the transaction and according the data store of the smart contract. The smart contract can, depending on the functions, call one or more functions of, as well as transfer cryptocurrency to, another smart contract(s) (or function(s) thereof) or transfer cryptocurrency to one or more addresses.

As well as their native cryptocurrencies, the Blockchain platforms C1, C2, also support non-native cryptocurrencies, which are additional classes of assets on these Blockchain platforms C1, C2. For example, cryptocurrencies according to the ERC-20 standard have proven to be popular on the Ethereum platform. Another example is USDT according to OmniLayer on the Bitcoin platform. Other examples include wrapped Bitcoin (WBTC), which allows for the exchange of a cryptocurrency pegged in value to Bitcoin on other Blockchain platforms, for example Ethereum.

There are cases where a particular cryptocurrency is available on multiple Blockchain platforms, in particular on the first Blockchain platform C1 and on the second Blockchain platform C2. In these cases, the owner entity has a first address A1 on the first Blockchain platform C1 and a second address A2 on the second Blockchain platform C2, each having a particular amount of the particular cryptocurrency available. The cryptocurrency is either stored directly in the addresses A1, A2, or managed by smart contracts, in which the internal data store of the smart contracts defines a current balance of the owner entity.

The first Blockchain platform C1 comprises, according to this disclosure, a first smart contract SC1 configured to perform a particular set of steps and to store a particular set of data as described herein. It is configured specifically to operate in conjunction with the channel relay server 1 to perform one or more of the steps as described herein.

Analogously, the second Blockchain platform C2 comprises, according to this disclosure, a second smart contract SC2 configured to perform a particular set of steps and to store a particular set of data as described herein. It is configured specifically to operate in conjunction with the channel relay server 1 to perform one or more of the steps as described herein.

Additionally, the Blockchain platforms C1, C2 each comprise a transaction pool P1, P2. The transaction pools P1, P2, each comprise a currently pending transaction TX T1, TX T2. A pending transaction TX T1, TX T2, is a transaction that has been submitted by a sender or a smart wallet but has not yet been incorporated into a Block. The individual computing nodes of the respective Blockchain platforms C1, C2 may propose a new Block, in particular a proposed Block N+1 and a proposed Block M+1, respectively, which Blocks incorporate the pending transactions TX T1, TX T2, respectively. The mechanism by which the computing nodes of the Blockchain platforms C1, C2 reach a consensus can be proof of work, proof of stake, or the like. The person in the art is aware that, in some circumstances, a fork can occur in which the canonical sequence of Blocks branches and it is unclear which of two accepted Blocks will ultimately be part of the canonical sequence, and that it may take a certain amount of time for the Blockchain platform C1, C2, to re-establish the canonical sequence. Therefore, a recipient of cryptocurrency funds may wait until the transaction containing the given transaction is a few Blocks "deep", i.e. that a number of subsequent Blocks have been appended to the Blockchain referencing the Block containing the given transaction. Depending on the specific Blockchain, it can take several minutes (for Bitcoin approximately ten minutes) for a new Block to be added, and therefore if the recipient wishes to wait until the Block containing the given transaction is three Blocks deep, for example, they would be required to wait approximately thirty minutes until they are of a reasonably high certainty that the transaction will not be rescinded caused by, for example, a fork in the Blockchain.

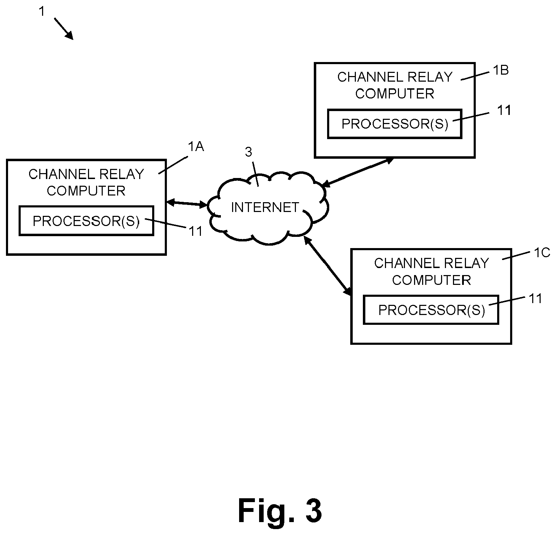

**Figure 3** shows a block diagram illustrating schematically the channel relay server 1 comprising a number of channel relay computers 1A, 1B, 1C communicatively coupled using the Internet 3. As explained herein in more detail, the channel relay server 1 is configured to monitor the first Blockchain C1 and the second Blockchain C2.

In an embodiment, the channel relay server 1 is a decentralized server in which the channel relay computers 1A, 1B, 1C are owned and/or operated by a plurality of entities, and which perform steps as described herein using a consensus mechanism.

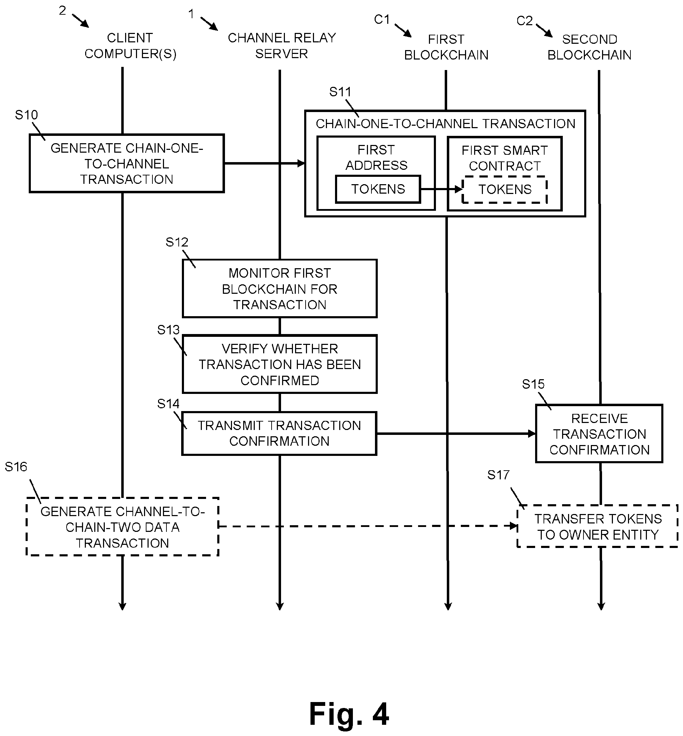

**Figure 4** shows a flow diagram illustrating a number of steps for transmitting transaction confirmation instructions to the second Blockchain platform C2.

In a step S10, the client computer 2, associated with the owner entity, submits a chain-one-to-channel data transaction T1 to the first Blockchain platform C1. The client computer 2 submits this transaction itself, in the case that the client computer 2 has implemented a node of the first Blockchain platform C1, or the client computer 2 submits the transaction via the RPC servers 4. The chain-one-to-channel data transaction T1 comprises a defined target address of a first smart contract SC1, a defined number of tokens of a particular cryptocurrency, and a first digital signature, wherein the first address A1 of the owner entity is derivable from the first digital signature, or derivable from the transaction instructions.

The chain-one-to-channel transaction T1 can further comprise a recipient address relating to a second address A2 of the defined number of tokens of the particular cryptocurrency, the second address A2 being on the second Blockchain platform C2.

In an embodiment, in particular relating to a native cryptocurrency, the chain-one-to-channel transaction T1 is configured to transfer the defined number of tokens of the particular cryptocurrency to the first smart contract SC1 directly, i.e. through the chain-one-to-channel data transaction T1 itself.

In an embodiment, in particular relating to a non-native cryptocurrency, a cryptocurrency smart contract on the first Blockchain is configured to manage the particular non-native cryptocurrency tokens.

The owner entity, the cryptocurrency smart contract, and the first smart contract SC1 can interact to transfer the defined number of cryptocurrency tokens from the owner entity (i.e. the first address A1 of the owner entity on the first Blockchain C1) in a number of ways.

For example, the chain-one-to-channel data transaction T1 is received by the cryptocurrency smart contract that manages the particular cryptocurrency. The cryptocurrency smart contract is configured to process the chain-one-to-channel data transaction T1 and, for example, forward at least part of the chain-one-to-channel data transaction T1 to the first smart contact SC1. Alternatively, or additionally, the cryptocurrency smart contract is configured to update an internal ledger by crediting the particular amount of the cryptocurrency to the first smart contract SC1. Optionally, the cryptocurrency smart contract then calls a function of the first smart contract SC1, or generates an additional data transaction directed to the first smart contract SC1, indicating the credit of the particular amount of cryptocurrency. In another example, the chain-one-to-channel data transaction T1 is specifically configured such that, when the transaction is incorporated into a Block in the first Blockchain C1, the cryptocurrency smart contract is configured to deduct, in the internal data store of the cryptocurrency smart contract, the defined number of tokens from a current balance associated with the sender address, and credit the defined number of tokens to a current balance associated with the first smart contract SC1.

In another example, the cryptocurrency smart contract is configured such that it contains an authorization of the owner entity, authorizing the first smart contract SC1 to interact with the cryptocurrency smart contract on behalf of the owner entity, such that in the execution of the chain-one-to-channel data transaction T1, which is configured to initiate the transfer within the first smart contract SC1, the defined number of cryptocurrency tokens are transferred, in the cryptocurrency smart contract, from the first address A1 of the owner entity to the address of the first smart contract SC1.

In a step S11, the chain-one-to-channel data transaction T1 is received in the first Blockchain platform C1. In particular, the chain-one-to-channel data transaction T1 is received in a transaction pool P1 of the first Blockchain platform C1 and may be incorporated into a pending Block N+1.

In a step S12, the channel relay server 1 monitors the first Blockchain platform C1 for the chain-one-to-channel data transaction T1. In particular, the processor(s) 11 of the channel relay computers 1A, 1B, 1C are configured to monitor the first Blockchain platform C1 by identifying whether transactions in the transaction pool P1, in a proposed Block N+1, or in an existing Block call the corresponding function of the first smart contract SC1. The processor is configured to identify the call of the corresponding function of the first smart contract SC1 by examining the receiver of the data transaction, by executing the transaction, or by monitoring events or logs of the execution output.

Depending on the embodiment, the channel relay server 1, in particular the channel relay computers 1A, 1B, 1C, can implement a node of the first Blockchain platform C1.

In a step S13, the channel relay server 1 verifies whether the chain-one-to-channel transaction T1 has been confirmed. In particular, the processor(s) of the channel relay computers 1A, 1B, 1C verify whether the chain-one-to-channel transaction T1 has been confirmed.

In an embodiment, the channel relay server 1 confirms the chain-one-to-channel transaction T1 by identifying whether the chain-one-to-channel transaction T1 is in the transaction pool P1 and/or has been included in at least one Block of the first Blockchain platform C1, preferably at least three blocks of the first Blockchain platform C1, most preferably at least ten blocks of the first Blockchain platform C1. Specifically, what is meant by being included in a defined number of blocks is that the block containing the chain-one-to-channel transaction T1 has been referenced directly or indirectly by at least the defined number of subsequent blocks, i.e. the block containing the chain-one-to-channel transaction T1 can to a high degree of certainty be said to form part of the canonical sequence of blocks of the first Blockchain platform C1. The higher the defined number of subsequent blocks, the higher the degree of certainty that there will not be a fork and that therefore the transaction cannot be "undone" or reverted.

In an embodiment, the channel relay server 1 confirms the chain-one-to-channel transaction T1 by reaching a consensus. In particular, the channel relay server 1 reaches a consensus when a pre-defined number and/or a pre-defined proportion of the channel relay computers 1A, 1B, 1C issue authorizations. In such a manner, the channel relay server 1 can more quickly confirm the chain-one-to-channel transaction T1 than by waiting for the block containing the chain-one-to-channel transaction T1 to be a sufficient number of blocks deep.

In an embodiment, the channel relay computers 1A, 1B, 1C are configured to establish a consensus as to whether the chain-one-to-channel data transaction T1 has been confirmed.

In an embodiment, a first staking smart contract is established on the first Blockchain platform C1 and/or a second staking smart contract is established on the second Blockchain platform C2. Additionally or alternatively, a third staking smart contract is established on a third Blockchain. These staking smart contacts are configured such that the channel relay computers 1A, 1B, 1C can stake cryptocurrency assets as security deposits. The staking smart contracts may further be configured to implement incentive mechanisms such that if the channel relay computers 1A, 1B, 1C act maliciously their stake is forfeited.

Additionally, in an embodiment, the first staking smart contract and/or the second staking smart contract implements a mechanism such that witness data transactions can be submitted to the staking smart contracts. These witness data transactions can speed up particular steps described herein, specifically in association with the transaction confirmation information.

For example, by default, after the chain-one-to-channel channel transaction T1 has been submitted to the first Blockchain C1, the owner entity or the channel relay server 1 must submit transaction confirmation information to the second Blockchain C2. This transaction confirmation information confirms that the chain-one-to-channel channel transaction T1 has occurred on the first Blockchain C1. The transaction confirmation information can be validated on the second Blockchain C2 by a smart contract, for example the second smart contract SC2.

Typically, the transaction confirmation information is only transmitted to and/or accepted by the second smart contract SC2 after a checkpoint, the checkpoint confirming the chain-one-to-channel transaction T1. The checkpoint represents a milestone in the first Blockchain C1 and is established at regular intervals, for example ever 100 blocks, or every 4 hours, 8 hours, or once per day. The checkpoint is significant because a double-spending attack becomes extremely difficult and unlikely to occur which reverts or nullifies transactions prior to the checkpoint.

The owner entity may submit the transaction confirmation information to the second Blockchain C2 in the form of a chain-two-confirmation data transaction T2 making use of the checkpoint. Thereby, the data transaction includes a proof of the inclusion of the chain-one-to-channel data transaction T1 in the data transaction. The proof is generated by reference the checkpoint and is designed such that it can be validated with reference to the checkpoint.

After the chain-one-to-channel transaction T1 has been confirmed on the first Blockchain C1, for example by being incorporated into one or more blocks, the channel relay server 1 may submit the transaction confirmation information in the form of a witness data transaction to the second Blockchain C2, in particular to the second smart contract SC2 or a separate witness smart contract on the second Blockchain C2.

The witness smart contact on the second Blockchain C2 is configured to receive one or more witness data transactions. Depending on the received witness data transactions, the witness smart contract will confirm the chain-one-to-channel transaction T1 by providing transaction confirmation information to the second smart contract SC2, for example by calling an appropriate function in the second smart contract SC2.

For example, the witness smart contract is configured to require a particular proportion of channel relay computers 1A, 1B, 1C to submit a witness data transaction. Additionally, or alternatively, the witness smart contract is configured to require a total staked amount of the channel relay computers 1A, 1B, 1C which submit witness data transactions to meet a defined threshold, the defined threshold, for example, being a value of the tokens of the cryptocurrency in the chain-one-to-channel data transaction T1 transaction or a multiple thereof (e.g., 300%).

This provides information to the second smart contract SC2 regarding the chain-one-to-channel transaction T1, in particular such that the second smart contract SC2 releases the tokens to the owner entity. Thereby, the tokens can be released prior to a checkpoint being reached on the first Blockchain C1, resulting in a quicker release of the funds. However, there is still a risk of double-spending, and the channel relay server 1 (or the channel relay computers 1, respectively) may lose their stake if they provide witness data transactions confirming the channel-one-to-chain data transaction T1 and if a double spending attack occurs and the tokens are lost.

If the chain-one-to-channel transaction T1 has been confirmed, the channel relay server 1, in a step S14, transmits transaction confirmation information to the second smart contract SC2 on the second Blockchain platform C2. This enables the second smart contract SC2 to make the cryptocurrency available to the owner entity on the second Blockchain platform C2, and thereby the channel relay server 1 has facilitated the transfer of the cryptocurrency from the first Blockchain platform C1 to the second Blockchain platform C2. Specifically, the second smart contract SC2 is configured such that it uses the transaction confirmation information to update an internal ledger by crediting the number of tokens to the second address A2 of the owner entity.

Depending on the embodiment, the channel relay server 1 transmits the transaction confirmation information to the second smart contract SC2 by generating a chain-two-confirmation data transaction T2 on the second Blockchain platform C2 or by generating the witness data transaction. The witness data transaction comprises a digital signature of the witness and at least part of the chain-one-to-channel data transaction T1, or an identifier of the chain-one-to-channel data transaction T1, and authorization information. The authorization information can include information related to witness data transactions. More details of the witness data transactions are described herein.

The chain-two-confirmation data transaction T2 is generated using an address on the second Blockchain platform C2 associated with the channel relay server 1, for example. The chain-two-confirmation data transaction T2 is addressed to the second smart contract SC2 and comprises, for example, at least part of the chain-one-to-channel data transaction T1, or an identifier of the chain-one-to-channel data transaction T1. The chain-two-confirmation data transaction T2 further comprises authorization information. The authorization information can include a proof of inclusion of the chain-one-to-channel data transaction T1 in a checkpoint, typically the most recent checkpoint or the second most recent checkpoint. The chain-two-confirmation data transaction is described herein in more detail.

A checkpoint is established on a Blockchain, for example, every four hours or every 100 blocks. The checkpoint is designed as a reference point from which a state of the Blockchain can be deduced at the point in time that the checkpoint was established. If a double-spend attack on the Blockchain is detected, the Blockchain may omit establishing a checkpoint until the Blockchain is no longer under attack.

After each checkpoint of the first Blockchain platform C1 is established, checkpoint information is transmitted to a smart contract on the second Blockchain platform C2 by the channel relay server 1, in case of consensus being affirmatively established. For example, a checkpoint information data transaction is transmitted to the second smart contract SC2.

The transaction confirmation information includes, for example, the sequence number of the last transaction of the channel included in a previous checkpoint, and a proof of the sequence number of the channel in the previous checkpoint. This enables the second Blockchain C2, in particular the second smart contract SC2, to verify whether the sequence number of the last transaction of the channel included in a previous checkpoint is equal to or higher than the sequence number of the chain-one-to-channel data transaction T1.

The sequence number in the channel refers to a global counter, for example maintained by the client computer 2 across both the first Blockchain C1 and the second Blockchain C2, indicating, for a particular owner entity, between the pair of the first address A1 on the first Blockchain C1 and the second address A2 on the second Blockchain C2, how many transactions the particular owner entity has submitted to the channel to the first smart contract SC1 and the second smart contract SC2.

In another example, the transaction confirmation information includes a transaction hash of the chain-one-to-channel data transaction T1 and a proof of inclusion of the transaction hash in the checkpoint. Thereby, the second smart contract SC2 can directly confirm the inclusion of the chain-one-to-channel data transaction T1 in the checkpoint.

In an embodiment, the chain-two-confirmation data transaction T2 comprises the defined number of tokens of the particular cryptocurrency. The chain-two-confirmation data transaction T2 can further comprise the sender address of the first address A1 of the owner entity. The chain-two-confirmation data transaction T2 can further comprise a recipient address, in particular relating to an address on the second Blockchain platform C2. The address on the second Blockchain platform C2 can also belong to the owner entity, or it can belong to another party.

In a step S15, the transaction confirmation information is received on the second Blockchain platform C2, specifically it is received in the second smart contract SC2. The second smart contract SC2 is configured such that, using the transaction confirmation information, the defined number of tokens of the particular cryptocurrency are made available to the owner entity or, in an embodiment, to another intended receiver defined by a receiving address. The defined number of tokens of the particular cryptocurrency can be made available to the owner entity. For example, by updating a ledger in an internal data store of the second smart contract SC2 to reflect the deposited defined number of tokens, in particular by crediting the defined number of tokens to the address A2 of the owner entity.

Depending on the embodiment, the second smart contract SC2 may call one or more functions or make one or more transfers on the second Blockchain platform C2 to one or more further smart contracts and/or addresses.

In a subsequent optional step S16, the client computer 2 is configured to submit a channel-to-chain-two data transaction T4 to the second Blockchain platform C2, the channel-to-chain-two data transaction T4 comprising: a function call to the second smart contract SC2, optionally an address of the owner entity, and a second digital signature of the owner entity. Additionally, the channel-to-chain-two data transaction T4 specifies a defined number of cryptocurrency tokens to be transferred from the second smart contract SC2 to the owner entity. In this manner, the owner entity can withdraw the cryptocurrency from the second smart contract SC2. The client computer 2 submits this transaction itself, in the case that the client computer 2 has implemented a node of the second Blockchain platform C2, or the client computer 2 submits the transaction via the RPC servers 4.

In an optional step S17, the second smart contract SC2 transfers the defined number of cryptocurrency tokens, as specified in the channel-to-chain-two data transaction T4 to the owner entity. The transfer of the cryptocurrency tokens can take place in a number of ways as described herein.

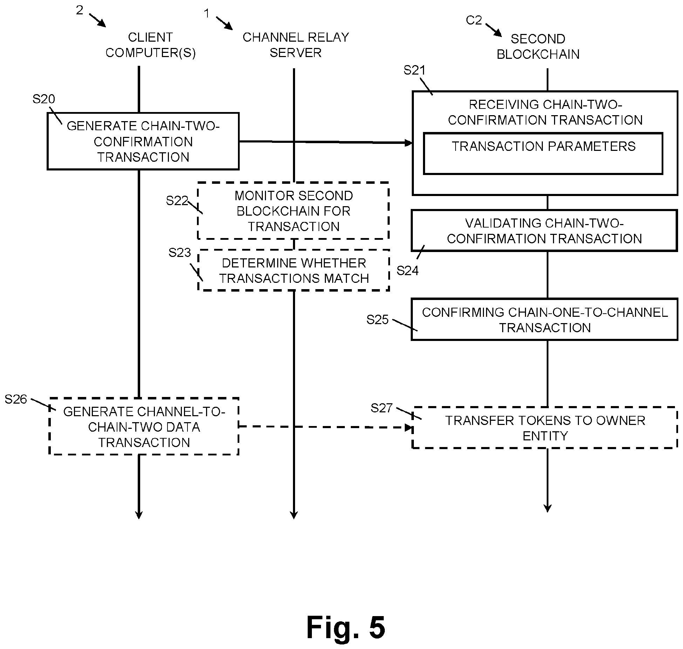

**Figure 5** shows a flow diagram illustrating a number of exemplary steps for transmitting transaction confirmation instructions to the second Blockchain platform C2. These steps apply in cases where the owner entity submits the chain-two-confirmation transaction to the second Blockchain platform C2, instead of or in addition to the channel relay server 1 performing this step.

These steps are carried out to step S10 described above with reference to Figure 4, in which the client computer 2 generates the chain-one-to-channel transaction S10. In the embodiments described with reference to **Figure 5****,** the client computer 2 generates the chain-two-confirmation data transaction T2 on the second Blockchain platform C2 rather than the channel relay server 1.

In a step S20, the client computer 2 generates a chain-two-confirmation transaction T2 and submits the chain-two-confirmation transaction T2 to the second Blockchain platform C2. Depending on the implementation, this step can involve the RPC server(s) 4, in particular in that the RPC server(s) 4 receive instructions from the client computer 2 to generate and submit the chain-two-confirmation transaction T2. The chain-two-confirmation transaction T2 comprises at least part of the chain-one-to-channel data transaction T1 or an identifier of the chain-one-to-channel data transaction T1.

In an embodiment, the chain-two-confirmation transaction T2 comprises an algorithmic proof referencing checkpoint information of the first Blockchain platform C1, the chain-two-confirmation transaction T2 configured to prove that the owner entity has transferred the defined number of tokens of the cryptocurrency to the first smart contract SC1.

In a step S21, the second Blockchain platform C2 receives the chain-two-confirmation transaction T2. The chain-two-confirmation transaction T2 is received in the transaction pool P2 and may be incorporated into a block of the second Blockchain platform C2.

In an optional step S22, the channel relay server 1 monitors the second Blockchain platform C2, in particular the transaction pool P2 and/or the blocks of the Blockchain, for the chain-two-confirmation transaction T2.

In an optional step S23, the channel relay server 1 determines whether the chain-two-confirmation transaction T2 matches the chain-one-to-channel data transaction T1. In particular, the processor(s) 11 of at least one of the channel relay computers 1A, 1B, 1C is configured to determine whether a match exists. Determining whether the data transactions T1, T2 match may comprise identifying whether at least part of both of the transactions T1, T2 correspond to each other, for example the sender address, a digital signature, and/or an identifier.

In a step S24, the second smart contract SC2 validates the chain-two-confirmation data transaction T2, by comparing whether the referenced checkpoint data included in the chain-two-confirmation transaction T2 matches checkpoint data of the first Blockchain platform C1 which is previously submitted to the second Blockchain platform C2, and by running the algorithmic proof over the proof included in the chain-two-confirmation data transaction T2, to verify whether the proof confirms the inclusion of the chain-one-to-channel transaction T1 using the referenced checkpoint data.

In a step S25, the second Blockchain platform C2 receives the transaction confirmation information, confirming the chain-one-to-channel transaction T1, as described above with reference to step S15.

S26 and S27 are analogous to steps S16 and S17 described above with reference to Figure 4.

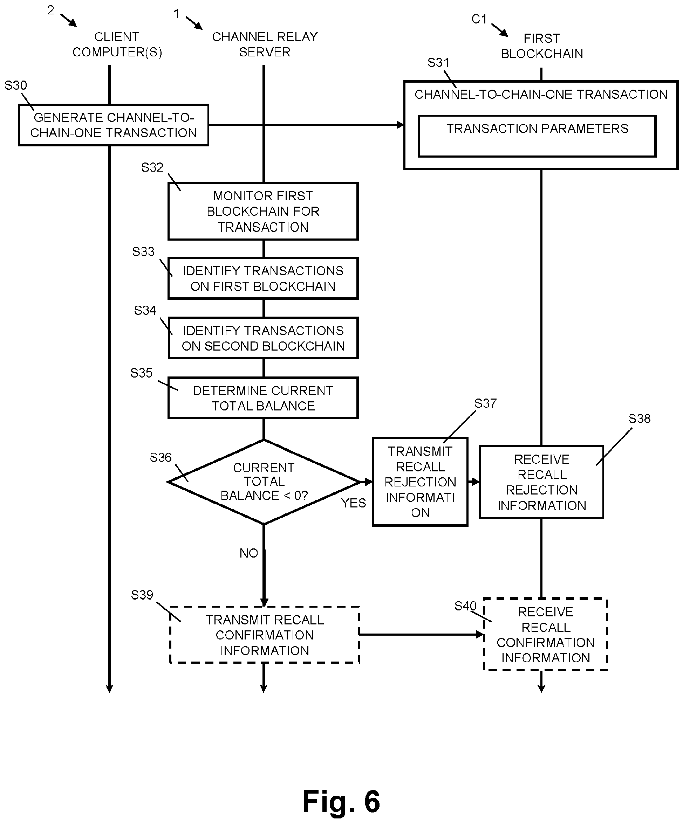

**Figure 6** shows a flow diagram illustrating a number of exemplary steps for transmitting recall rejection/confirmation information to the first Blockchain platform C1. These steps relate to how the owner entity can withdraw cryptocurrency from the channel back to their first address A1 on the first Blockchain platform C1, for example in cases where the owner entity does not wish to proceed with transferring the money to the second Blockchain platform C2. The term channel here refers to the first smart contract SC1 and the second smart contract SC2, which operate in conjunction with the channel relay server 1.

In a step S30, the owner entity, in particular using the client computer 2, generates a channel-to-chain-one transaction T3. The channel-to-chain-one transaction T3 comprises the defined target address of the first smart contract SC1 and a third digital signature of the owner entity. The first address A1 of the owner entity is derivable from the third digital signature, or derivable from the transaction instruction of the channel-to-chain-one transaction T3. The second address A2 is derivable from the execution of the channel-to-chain-one transaction T3. Additionally, the channel-to-chain-one transaction T3 comprises an indication that a recall of cryptocurrency tokens is desired. The channel-to-chain-one transaction T3 can further comprise an indication of how many cryptocurrency tokens are to be returned to the possession of the owner entity. Additionally, the channel-to-chain-one data transaction T3 can further comprise an amount of cryptocurrency tokens that defines the remaining total balance of the defined type of cryptocurrency token should the recall be accepted.

To ensure that the cryptocurrency tokens which the owner entity wishes to recall is still available for the owner entity, the channel relay server 1 is configured to check whether the owner entity is entitled to a recall. In particular, the channel relay server 1 is configured to determine a current balance of the owner entity and, if the current balance is less than the desired recall amount, to provide proof that the owner entity is not entitled to the recall. If the channel relay server 1 does not provide such proof within a pre-determined time interval, the owner entity is entitled to the recall.

The specific steps involved in achieving this are detailed below. In such a manner, the owner entity is able to recall their cryptocurrency (i.e. withdraw it) even if the channel relay server 1 is unresponsive.

In a step S33, the channel relay server 1, in particular the processor 11, identifies data transactions on the first Blockchain platform C1, including at least all data transactions since the last confirmed recall of a previous channel-to-chain-one data transaction, related to both of: the first sender address A1 and the first smart contract SC1, the data transactions comprising confirmed data transactions and/or unconfirmed data transactions, each data transaction relating to a cryptocurrency token transfer and a timestamp.

In a step S34, the channel relay server 1, in particular the processor 11, identifies data transactions on the second Blockchain platform C2, including at least all data transactions since the last confirmed recall of a previous channel-to-chain-one data transaction, related to both of: the second address A2 and the second smart contract SC2, the data transactions comprising confirmed data transactions and/or unconfirmed data transactions, each data transaction relating to a cryptocurrency token transfer and a timestamp.

In a step S35, the channel relay server 1 determines a current total balance of the owner entity using the identified data transactions on the first Blockchain platform C1 and the identified data transactions on the second Blockchain platform C2. In particular, the current balance is determined using the defined number of cryptocurrency tokens of the identified data transactions on both the first Blockchain platform C1 and the second Blockchain platform C2 and by executing the identified data transactions in sequence according to the timestamp of each identified data transaction. In such a manner the channel relay server 1 replays transactions related to the cryptocurrency token transfer between the first address A1 of the owner entity and the second address A2 of the owner entity through the secure asset transfer system (channel) described herein to determine a current total balance of the owner entity held on the first smart contract SC1 and the second smart contract SC2.

Additionally, or alternatively, the current total balance is determined using one or two pre-calculated summaries of the same set of data transactions, i.e., the set of data transactions identified above on the first Blockchain platform C1 and/or the set of data transactions identified above on the second Blockchain platform C2. The pre-calculated summary is generated by the channel relay server 1 or the smart contracts SC1, SC2 (e.g., the first smart contract SC1 performs a pre-calculation of that subset of transactions related to the first Blockchain platform C1, and the second smart contract SC2 performs a pre-calculation of that subset of transactions related to the first Blockchain platform C2). The pre-calculated summary is generated in advance, i.e., before the channel-to-chain-one transaction T3 is generated.

In a step S36, the channel relay server 1 determines whether the current total balance of the owner entity held on the first smart contract SC1 and the second smart contract SC2 becomes negative should the recall of channel-to-chain-one data transaction be confirmed.

In a step S37, the channel relay server 1 transmits recall rejection information to the first smart contract SC1 if the current total balance is negative.

In a step S38, the first smart contract SC1 receives the recall rejection from the channel relay server 1, for example via a data transaction from an address of the channel relay server 1 on the first Blockchain platform C1. The first smart contract SC1 rejects the recall instructions as contained in the channel-to-chain-one transaction T3. In an example, the first smart contract SC1 may maintain a sequence number of the last confirmed recall of a previous channel-to-chain-one transaction, and in this case the sequence number remains the previous value.

In an optional step S39, the channel relay server 1 transmits an optional recall confirmation information to the first smart contract SC1 if the current total balance is non-negative.

In an optional step S40, the first smart contract SC1 receives the recall confirmation information from the channel relay server 1, for example via a data transaction from an address of the channel relay server 1 on the first Blockchain platform C1. The first smart contract SC1 performs the recall instructions as contained in the channel-to-chain-one transaction T3, in particular by making the cryptocurrency available to the owner. In an example, the first smart contract SC1 may further maintain a sequence number of the last confirmed recall of a previous channel-to-chain-one transaction, and in this case the sequence number is updated to the sequence number of the channel-to-chain-one transaction T3. Making the cryptocurrency available to the owner entity may comprise transferring a full or partial amount of cryptocurrency currently assigned to the owner entity to the address A1 of the owner entity, or generating one or more further function calls to one or more further smart contracts on the first Blockchain platform C1, the further function calls comprising instructions to transfer or credit the full or partial amount of cryptocurrency to the owner entity.

Thereby, the first smart contract SC1 cannot reject the channel-to-chain-one transaction T3 unless recall rejection information is submitted to the first smart contract SC1, within a pre-defined time period, by the channel relay server 1.

In case the channel-to-chain-one transaction T3 should be rejected, a computer may join the channel relay server 1 in order to submit the recall rejection information. In particular, another client computer 2 is provided an incentive to join the channel relay server 1 for this purpose, because a malicious recall of cryptocurrency tokens from the system undermines the total asset value held in this system of its associated owner entity.

The recall rejection information (i.e. the proof submitted by the channel relay server 1 denying the withdrawal), as described above, must provide evidence (proof) that the total balance of the owner entity is negative. Therefore, the channel relay server 1 generates recall rejection information including, for example, a copy of or references to one or more transactions of the owner entity on the first Blockchain C1 and the second Blockchain C2, which prove that the total balance of the owner entity is negative. The transactions must complete the record of all transactions between the owner entity and the smart contracts SC1, SC2, at least since the last recall confirmation of a previous channel-to-chain-one data transaction. The transactions can be either validated to belong to the owner entity by their digital signature, or validated to be transmitted from the channel relay server 1, in case of consensus being affirmatively established, or in case of a valid proof being provided. Additionally, or alternatively, the recall rejection information can include evidence of two transactions with the same sequence number.

If the channel relay server 1 does not provide the recall information (i.e. either the recall confirmation information or the recall rejection information) within a pre-defined time period, then the first smart contract SC1 is configured to execute the recall according to the channel-to-chain-one transaction T3. Thereby, the owner entity can recall their cryptocurrency from the first smart contract SC1, even if the channel relay server 1 is unresponsive.

In an embodiment, the channel relay server 1 further identifies, on the first Blockchain platform C1, the second Blockchain platform C2, or both, checkpoint information related to one or more checkpoints. Each checkpoint comprises commitment data of the first smart contract SC1 or the second smart contract SC2, respectively. The checkpoint may further comprise a reference to a previous checkpoint. The commitment data comprises a provable digest of the state of the smart contracts SC1, SC2, in particular a state of the internal data store of the smart contracts SC1, SC2 at a time-point corresponding to a timestamp of the particular checkpoint. A provable digest is, for example, a merkle root or a cryptographic accumulator. The proof (in relation to the provable digest) first refers to a specific checkpoint and gives the key and value pair to be proved, and the proof data and the proof algorithm. The proof data and the proof algorithm can deduce the key and value from the provable digest if and only if the proof is valid.

In comparison, channel-to-chain-two data transactions may be designed to be executed or rejected immediately upon receiving by the second smart contract SC2 on the second Blockchain platform C2, without any other steps involving the channel relay server 1. To prevent a double-spending attack by a client computer(s) 2 submitting channel-to-chain-one transactions and channel-to-chain-two transactions at or around the same time, and to make sure that all the cryptocurrency tokens belonging to the owner entity is available for withdrawal by a channel-to-chain-two data transaction, additional information about a channel-to-chain-one transaction T3 may be transmitted to the second Blockchain platform C2. In one example, recall confirmation information is transmitted to the second smart contract SC2 on the second Blockchain platform C2 for each channel-to-chain-one data transaction T3, much earlier than the optional recall confirmation information is transmitted to the first Blockchain platform C1. In another example, a copy of each channel-to-chain-one transaction T3 is configured to be transmitted to the second smart contract SC2 on the second Blockchain platform C2, by a channel relay computer 1A, or by the client computer 2, and the amount of cryptocurrency tokens specified in the channel-to-chain-one data transaction is temporarily locked in the second smart contract SC2, until a recall rejection information of the channel-to-chain-one data transaction is transmitted to the second smart contract SC2 of the second Blockchain platform C2, after the recall rejection information is confirmed on the first Blockchain platform C1.

## Claims

1. A computer implemented method for facilitating a secure transfer of cryptocurrency between two Blockchain platforms (C1, C2) using a computerized channel relay server (1), the method comprising:
monitoring (S12), using a processor (11) of the channel relay server (1), a first Blockchain platform (C1) for a chain-one-to-channel data transaction (T1) comprising: a defined target address of a first smart contract (SC1), a defined number of tokens of a particular cryptocurrency, and a first digital signature, wherein a first address (A1) of an owner entity is either derivable from the first digital signature, or derivable from transaction instructions of the chain-one-to-channel data transaction (T1);
verifying (S13), using the processor (11), whether the chain-one-to-channel data transaction (T1) has been confirmed on the first Blockchain platform (C1); and
transmitting (S14), using the processor (11), transaction confirmation information to a second smart contract (SC2) on a second Blockchain platform (C2), in case of affirmative confirmation of the chain-one-to-channel data transaction (T1).

2. The method of claim 1, wherein the computerized channel relay server (1) implements, using the processor (11), a node of the first Blockchain platform (C1), and wherein monitoring (S2) the first Blockchain platform (C1) comprises identifying, using the processor (11), the chain-one-to-channel data transaction (T1) in one or more of the following: in a transaction pool (P1) related to the first Blockchain platform (C1) or in a block of the first Blockchain platform (C1).

3. The method of one of claims 1 or 2, wherein the computerized channel relay server (1) comprises a plurality of channel relay computers (1A, 1B, 1C), and a subset of the channel relay computers (1A, 1B, 1C) are designated as witnesses, wherein the method further comprises:
submitting, using the processor (11) of a particular one of the channel relay computers (1A, 1B, 1C) designated as a witness, a witness data transaction to the second Blockchain (C2), causing the transmitting of the transaction confirmation information, the witness data transaction including a digital signature of the witness and at least part of the chain-one-to-channel data transaction (T1), or an identifier thereof, and authorization information.

4. The method of claim 3, further comprising:
monitoring (S22), by the processors (11) of the channel relay computers (1A, 1B, 1 C), the second Blockchain platform (C2) for a chain-two-confirmation data transaction (T2) matching the chain-one-to-channel data transaction (T1), and
establishing, in the channel relay computers (1A, 1B, 1C), a consensus amongst the channel relay computers (1A, 1B, 1C) as to whether the transaction confirmation information is to be transmitted for the chain-one-to-channel data transaction (T1), dependent on the correct execution of the chain-two-confirmation data transaction (T2) on the second Blockchain platform (C2).

5. The method of one of claims 1 to 4, wherein the computerized channel relay server (1) implements a node of the second Blockchain platform (C2), and wherein monitoring (S22), using the processor (11), the second Blockchain platform (C2) comprises identifying, using the processor (11), the chain-two-confirmation data transaction (T2) in one or more of the following: in a transaction pool (T2) related to the second Blockchain platform (C2) or in a block of the second Blockchain platform (C2).

6. The method of one of claims 1 to 5, wherein transmitting the transaction confirmation information to the second smart contract (SC2) on the second Blockchain platform (C2) comprises:
determining, using the processor (11), whether the chain-one-to-channel data transaction (T1) has been included in checkpoint information of the first Blockchain platform (C1) and/or of the first smart contract (SC1), the checkpoint information related to one or preferably two checkpoints provided by the first Blockchain platform (C1) and/or provided by the first smart contract (SC1), respectively; and
generating, using the processor (11), a chain-two-confirmation data transaction (T2) on the second Blockchain platform (C2), causing the transmitting of the transaction confirmation information, the chain-two-confirmation data transaction (T2) comprising at least part of the chain-one-to-channel data transaction (T1), or an identifier thereof, and authorization information.

7. The method of one of claims 1 to 6, further comprising the steps of:
monitoring (S32), using the processor (11), the first Blockchain platform (C1) for a channel-to-chain-one data transaction (T3) comprising: the defined target address of the first smart contract (SC1), and a third digital signature, wherein the first address (A1) of the owner entity is either derivable from the third digital signature, or derivable from the transaction instructions of the channel-to-chain-one data transaction (T3), wherein a second address (A2) on the second Blockchain platform (C2) is derivable from the execution of the channel-to-chain-one data transaction (T3);
identifying (S33), using the processor (11), one or more of:
data transactions on the first Blockchain platform (C1), including at least all data transactions since a last confirmed recall of a previous channel-to-chain-one data transaction (T3), related to both of: the first address (A1) and the first smart contract (SC1), the data transactions comprising confirmed data transactions and/or unconfirmed data transactions, each of the data transactions relating to a cryptocurrency token transfer and having a timestamp; or
a pre-calculated transaction summary of the aforementioned data transactions;
identifying (S34), using the processor (11), one or more of:
data transactions on the second Blockchain platform (C2), including at least all data transactions since the last confirmed recall of the previous channel-to-chain-one data transaction (T3), related to both of: the second address (A2) and the second smart contract (SC2), the data transactions comprising confirmed data transactions and/or unconfirmed data transactions, each data transaction relating to a cryptocurrency token transfer and a timestamp; or
a pre-calculated transaction summary of the aforementioned data transactions;
determining (S35) a current total balance of the owner entity using the identified data transactions, or the pre-calculated transaction summaries on the first Blockchain platform (C1), and the identified data transactions on the second Blockchain platform (C2), or the pre-calculated transaction summaries on the second Blockchain platform (C2);
transmitting (S37), using the processor (11), recall rejection information to the first smart contract (SC1) if the current total balance is negative.

8. The method of claim 7, wherein the channel-to-chain-one data transaction (T3) further comprises a defined amount of cryptocurrency tokens to be returned to the first address (A1) of the owner entity and/or an amount of cryptocurrency tokens defining a remaining total balance of the defined type of cryptocurrency token should the recall be confirmed.

9. The method of one of claims 1 to 8, further comprising:
identifying, on one or more of: the first Blockchain platform (C1) or the second Blockchain platform (C2), checkpoint information related to one or more checkpoints of the first Blockchain platform (C1) or of the second Blockchain platform (C2), the checkpoint information comprising commitment data of first the smart contract (SC1), the commitment data comprising a state of the first smart contract (SC1) corresponding to a timestamp included in the checkpoint information;
confirming, using the processor (11), the channel-to-chain-one data transaction (T1) using the checkpoint information; and
generating, using the processor (11) the transaction confirmation information, in case of affirmative confirmation of the chain-one-to-channel data transaction.

10. The method of one of claims 1 to 9, wherein determining whether the chain-one-to-channel data transaction (T1) and the chain-two-confirmation data transaction (T2) match comprises comparing, using the processor (11):
a first identifier included in the chain-one-to-channel data transaction (T1) and a second identifier included in the chain-two-confirmation data transaction (T2);
or, in case the chain-two-confirmation data transaction (T1) includes part of the chain-one-to-channel data transaction (T1), a first digest computed from a particular part of the chain-one-to-channel data transaction (T1) included in the chain-two-confirmation data transaction (T2), and a second digest computed from the particular part of the chain-one-to-channel data transaction (T1),.

11. A computerized channel relay server (1) for facilitating a secure digital asset transfer between two Blockchain platforms (C1, C2), the channel relay server (1) comprising a processor (11) configured to implement a method according to one of claims 1 to 10.

12. The channel relay server (1) of claim 11, the channel relay server (1) comprising a plurality of distributed channel relay computers (1A, 1B, 1C) communicatively coupled to each other.

13. The channel relay server (1) of claim 12, wherein each channel relay computer (1A, 1B, 1C) comprises a processor (11) configured to:
monitor (S12) the first Blockchain platform (C1) for the chain-one-to-channel data transaction (T1) addressed to the first smart contract (SC1),
exchange one or more data messages with other channel relay computers (1A, 1B, 1C) to establish in the channel relay server (1) a consensus as to whether the chain-one-to-channel data transaction (T1) has been confirmed; and
transmit (S14) the transaction confirmation information to the second smart contract (SC2) in case of the consensus being affirmatively established.

14. A system for facilitating a secure transfer of digital assets between two Blockchain platforms (C1, C2), the system comprising a computerized channel relay server (1) according to one of claims 11 to 13 and one or more client computers (2) associated with an owner entity, the client computer(s) (2) comprising a processor (21) configured to:
generate (S10) a chain-one-to-channel data transaction (T1) on a first Blockchain platform (C1), the chain-one-to-channel data transaction (T1) comprising: a defined target address of a first smart contract (SC1), a defined number of tokens of a particular cryptocurrency, and a first digital signature, wherein a first address (A1) of the owner entity is derivable either from the first digital signature or from transaction instructions of the chain-one-to-channel data transaction (T1); and
generate a channel-to-chain-two data transaction (T4) on a second Blockchain platform (C2), the channel-to-chain-two data transaction (T4) comprising: a defined target address of a second smart contract (SC2) and a digital signature providing an authorization of the owner entity.

15. The system of claim 14, wherein the processor (21) of the client computer (2) is configured to:
generate (S21) a chain-two-confirmation data transaction (T2) on the second Blockchain platform (C2), prior to generating the channel-to-chain-two transaction (T4), wherein the chain-two-confirmation data transaction (T2) is from a digital wallet associated with the owner entity and addressed to the second smart contract (SC2), wherein the chain-two-confirmation data transaction (T2) comprises at least part of the chain-one-to-channel data transaction (T1), or an identifier thereof, and authorization information.

16. The system of one of claims 14 or 15, wherein the processor (21) of the client computer (2) is configured to generate a channel-to-chain-one data transaction (T3) on the first Blockchain platform (C1), the channel-to-chain-one data transaction (T3) comprising: the defined target address of the first smart contract (SC1) and a third digital signature, wherein the first address (A1) of the owner entity is either derivable from the third digital signature, or derivable from the transaction instructions of the channel-to-chain-one data transaction (T3).

17. The system of one of claims 14 to 16, wherein the processor (21) of the client computer (2) is configured to generate a chain-two-to-channel data transaction (T5) on the second Blockchain platform (C2), the chain-two-to-channel data transaction (T5) comprising: the defined target address of the second smart contract (SC2), a defined number of tokens of the particular cryptocurrency, and a second digital signature providing an authorization of the owner entity.

18. The system of one of claims 14 to 17, the system further comprising a first smart contract (SC1) on the first Blockchain platform (C1) configured to:
receive the chain-one-to-channel data transaction (T1) from the first address (A1) associated with the owner entity comprising the defined number of tokens of a particular cryptocurrency, and
generate and store, using data contained in the chain-one-to-channel data transaction (T1), the pair of the first address (A1) and the second address (A2) of the owner entity on the first Blockchain (C1).

19. The system of one of claims 14 to 18, the system further comprising a second smart contract (SC2) on the second Blockchain platform (C2) configured to:
receive the chain-two-confirmation data transaction (T2) comprising at least part of the chain-one-to-channel data transaction (T1), or an identifier thereof, and authorization information; and
generate and store, using the defined number of tokens of the chain-one-to-channel data transaction (T1), a current balance of cryptocurrency tokens associated with the owner entity on the second Blockchain (C2).

20. A computer program product comprising computer program code, which directs a processor (11) of a computerized channel relay server (1) to perform a method according to one of claims 1 to 10.
